# EUROPÄISCHE PATENTSCHRIFT

(11) **EP 1 442 939 B1**
(45) Veröffentlichungstag und Bekanntmachung des Hinweises auf die Patenterteilung: **22.03.2006**
(21) Anmeldenummer: 04001898.8
(22) Anmeldetag: 29.01.2004
(51) Int. Cl.: B60R 9/058, B60R 9/04, B60R 9/045

(54) **Dachreling für ein Fahrzeug und ein Fahrzeugdach**
Roof rail for a vehicle and a vehicle roof
Rail de toit pour un véhicule et un toit de véhicule

(30) Priorität: 01.02.2003 DE 10304016
(43) Veröffentlichungstag der Anmeldung: 04.08.2004
(73) Patentinhaber: ADAM OPEL AG, 65423 Rüsselsheim (DE)
(72) Erfinder: Hürter, Helmut, 64572 Büttelborn (DE); Mathes, Bernhard, 65428 Rüsselsheim (DE); Stahlhut, Richard, 63075 Offenbach (DE); Stever, Tobias, 65428 Rüsselsheim (DE)

(56) Entgegenhaltungen:
- EP-A- 1 153 798
- DE-A- 19 912 078
- US-A- 3 325 067
- US-A- 5 845 829
- US-B1- 6 267 281
- US-B1- 6 338 428

## Beschreibung

Die Erfindung bezieht sich auf eine Dachreling für ein Fahrzeug, die aus einem länglichen, hohl ausgeführten Holm besteht, der mit mindestens zwei Stützfüßen auf dem Dach des Fahrzeuges befestigbar ist, wobei in den Seitenwänden des Holmes Einprägungen zur Aufnahme von Halteklammern eines an der Dachreling zu befestigenden Querträgers vorgesehen sind.

Derartige Dachrelinge dienen vor allem dazu, die Montage von Dachlastträgern zu erleichtern. Diese weisen dazu Querträger auf, die mittels geeigneter Befestigungsmittel an der Dachreling befestigt werden. Desweiteren erzeugen die Dachrelinge einen ästhetischen Eindruck, da sie dem Fahrzeug durchaus eine sportliche Note verleihen. Üblicherweise weisen die Dachrelinge mehrere stützfüße auf, nämlich einen vorderen, einen hinteren und einen Mittelfuß, die in geeigneter Weise mit dem Fahrzeugdach in einer unterhalb der Dachhaut liegenden Dachrinne verschraubt werden. Die Füße haben eine solche Höhe, dass zwischen dem Holm und der Dachhaut ein Spalt verbleibt, so dass die Befestigungsmittel den Holm untergreifen können.

Ein derartige Dachreling ist in der EP 1 153 798 A2 beschrieben. Die Stützfüße sind jeweils in Form einer kurzen Säule ausgebildet, deren oberes Ende in die Dachreling übergeht und deren Boden am Fahrzeugdach mittels eine Schraubverbindung befestigt ist.

Eine Dachreling ist auch in der DE 199 12 078 C2 beschrieben. Bei ihr werden die Halteklammern der Befestigungsmittel in den Spalt zwischen dem Holm und dem Fahrzeugdach geführt.

Bei einem fahrenden Fahrzeug herrscht ein wechselnder Winddruck auf den Dachlastträger. Damit dies nicht zu einem Lockern der Verbindung der Dachreling mit dem Fahrzeugdach führt, ist eine gewisse Vorspannung in der Verbindung notwendig.

Die Erfindung beruht somit auf der Aufgabe, die Verbindung mit geringen Aufwand gegen ein Lockern zu sichern.

Zur Lösung des Problems sieht die Erfindung eine Dachreling gemäß des Oberbegriffs des Anspruchs 1 vor, mit den weiteren Merkmalen, dass die Stützfüße einteilig mit dem Holm ausgeführt sind und als Ausprägungen des Holmbodens realisiert sind, und dass die Stützfüße jeweils eine Brücke, bestehend aus Brückenpfeilern und einem Brückenbogen bilden, wobei Brückenpfeiler am Fahrzeugdach abgestützt sind und der Brückenbogen unter Spannung am Fahrzeugdach befestigt ist.

Die Brücke bildet daher ein leicht federndes, nachgiebiges Element, das die Befestigung stete unter Spannung hält, so dass ein Lösen auch bei einer wechselbelastung nicht eintreten kann.

Die im Oberbegriff erwähnten Halteklammern greifen seitlich in die Einprägung der Dachreling ein und stützen dabei das Gewicht des Dachlastträgers und des darauf liegenden Gepäcks an einer unteren Seitenwand der Einprägung ab.

Gleichzeitig untergreifen die Halteklammern eine obere Seitenwand der Einprägung, so dass der Dachlastträger auch nicht durch eine stoßartige Belastung, wie sie bei einer heftigen Bremsung oder einem Unfall auftritt, von der Dachreling gerissen werden kann.

In einfachster Weise sind die Einprägungen durch sich in Längsrichtung des Holmes erstreckende Sicken ausgebildet. Dabei ergibt sich gleichzeitig eine Versteifung der Dachreling als Ganzes.

Im Prinzip kann damit der Dachlastträger an beliebiger Stelle der Dachreling befestigt werden. Aus Gründen der Gewichtsverteilung sind aber bestimmte Stellen bevorzugt. Desweiteren soll vermieden werden, dass sich der Dachlastträger z. B. aufgrund stoßartiger Belastungen verschiebt. Daher sieht die Erfindung vor, dass zumindest in den Einprägungen einer Holmseite Vorsprünge in Form von Ausprägungen vorhanden sind, die mit entsprechenden Ausnehmungen an den Halteklammern korrespondieren, um so deren Verschiebung entlang des Holmes zu verhindern. Dabei befinden sich die Ausprägungen vorzugsweise an der Innenseite der Dachreling, können also den ästhetischen Gesamteindruck nicht stören, weil sie bei einem normalen seitlichen Blick auf das Fahrzeug nicht zu erkennen sind.

Eine vorschriftsmäßige Dachlastbeladung vorausgesetzt gewährt eine Verbindung, bei der die Halteklammer in die Sicken der Dachreling eingreifen, einen ausreichenden Halt. Bei Überladungen und ruckartigen Belastungen infolge einer Kollision besteht aber durchaus die Notwendigkeit, die Verbindung zwischen dem Dachlastträger und der Dachreling noch weiter zu verbessern. Es ist daher vorgesehen, dass die Halteklammer und die Dachreling über in etwa horizontal verlaufende Haltebolzen miteinander verbunden sind. Da die Haltebolzen weit in die Reling eintauchen können, ergibt sich eine innige und daher hoch belastbare Verbindung.

Vorzugsweise sind die Haltebolzen an der Halteklammer befestigt und jeweils in einen entsprechend geformten Schacht in der Dachreling eingeführt. Dieser Schacht kann z. B. von einer hohl ausgeführten Nietmutter gebildet sein, in die der massive Haltebolzen eintaucht.

Der Schacht kann sich einerseits in der Ausprägung in der Dachreling oder in der Sicke selbst befinden.

Ein derartiger Holm lässt sich vorzugsweise im Innenhochdruckverfahren herstellen. Dieses Verfahren ist an sich bekannt. Dabei wird ein vorgeformtes Rohr mit ei ner Flüssigkeit gefüllt, und anschliessend innerhalb einer das Aussenprofil des Rohres bestimmenden Form unter Druck gesetzt, so dass sich das Rohr bis an die Innenwand der Form aufweitet und den gewünschten Holm bildet.

Auch die schon erwähnten Stützfüße können einteilig mit dem Holm ausgeführt sein und als.Ausprägung des Holmbodens realisiert sein.

Vorzugsweise besteht das Befestigungsmittel zum Befestigen der Dachreling am Fahrzeugdach aus Nietmuttern, die im Brückenbogen angebracht sind, in die jeweils ein Gewindebolzen eingeschraubt ist, mit dem die Dachreling am Fahrzeug befestigt wird. An Stelle der Nietmutter/Schraubbolzen kann auch im Brückenbogen ein mit einem Gewinde versehener Schweissbolzen vorgesehen sein. Um die Öffnung im Fahrzeugdach zur Durchführung des Gewindebolzens gegen ein Eindringen von Feuchtigkeit zu sichern, ist ein elastischer Dichtring auf dem Gewindebolzen bzw. Schweissbolzen vorhanden.

Die Erfindung bezieht sich ausserdem auf ein Fahrzeugdach mit zwei Dachrinnen in der Dachhaut, an deren Böden jeweils eine zuvor beschriebene Dachreling befestigt ist. Wie schon erwähnt, ist die Dachreling üblicherweise so ausgeführt, dass ein Spalt zwischen der Dachreling und der Dachhaut verbleibt. Hier bilden sich Luftwirbel, die den Fahrtwiderstand erhöhen.

Die Erfindung beruht somit weiterhin auf dem Problem, eine Dachreling zu schaffen, an der ein Dachlastträger leicht befestigt werden kann, wobei die auf dem Fahrzeugdach befestigten Dachrelinge keinen oder nur einen kleinen zusätzlichen Luftwiderstand erzeugen.

Zur Lösung des Problems sieht die Erfindung ein Fahrzeugdach gemäß des Oberbegriffs des Anspruchs 12 vor, bei dem der Holmboden in den Abschnitten zwischen den Stützfüßen ebenfalls in die Dachrinne eintaucht, wobei die Einprägungen sich oberhalb der Dachhaut befinden und wobei dazu die die Stützfüße bildenden Ausprägungen im Holmboden nur wenig gegenüber diesen hervorstehen.

Da sich auf diese Weise kein Spalt mehr zwischen der Dachreling und der Dachhaut ausbildet, können sich auch keine Luftwirbel einstellen, die den Luftwiderstand erhöhen. Ausserdem entsteht ein besonders ästhetischer Eindruck, da die Dachreling als einteilig mit dem Dach erscheint.

Zur Verdeutlichung des Erfindungsgedankens wird im Folgenden ein Ausführungsbeispiel näher erläutert. Dazu zeigen:
- Fig. 1: eine Gesamtdarstellung einer Dachreling mit einer seitlichen, länglichen Einprägung in perspektivischer Form;
- Fig. 2: einen Ausschnitt aus der Figur 1, der dort durch den Kreis A markiert ist;
- Fig. 3a und Fig. 3b: mögliche Querschnitte von Ausprägungen in der Einprägung der Dachreling;
- Fig. 4: verdeutlicht die Ausgestaltung des Dachrelingsbodens im Bereich eines Befestigungspunktes mit dem Fahrzeugdach;
- Fig. 5: zeigt in einer Querschnittsdarstellung die Befestigung der Dachreling in einer Dachrinne am Fahrzeugdach;
- Fig. 6: zeigt eine zusätzliche Bolzenverbindung zwischen der Halteklammer und der Dachreling;
- Fig. 7: zeigt einen Schnitt entlang der Linie VII-VII und
- Fig. 8: zeigt die Schnittdarstellung einer weiteren Ausführung der Bolzenverbindung.

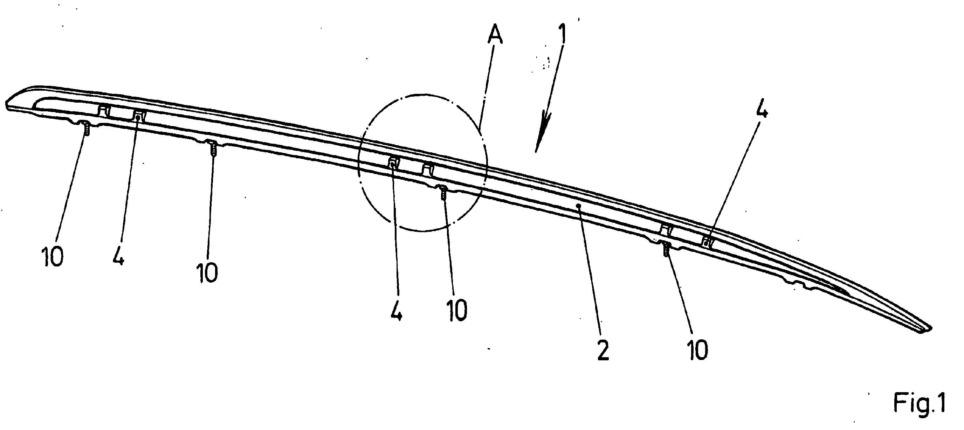

Zunächst wird auf die Figur 1 Bezug genommen. Die Figur 1 zeigt zunächst eine Dachreling, die als länglicher, hohl ausgeführter Holm 1 realisiert ist. Figur 1 zeigt dabei die Seite des Holmes 1, die der Fahrzeugmittelebene zugewandt ist.

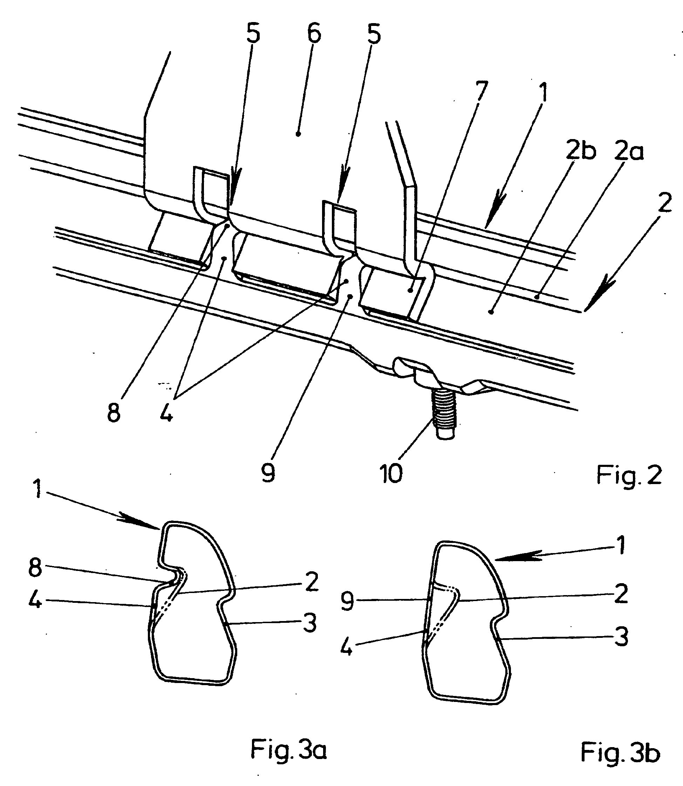

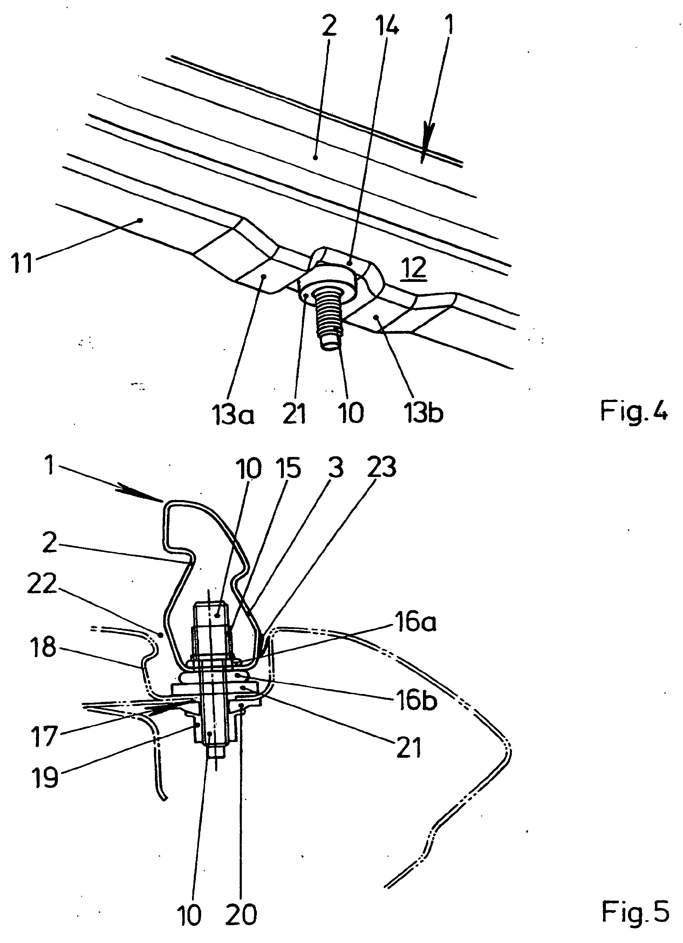

Der Holm 1 weist zu beiden Seiten sich nahezu über die gesamte Länge erstreckende Sicken 2, 3 auf, die in den Querschnittsdarstellungen der Figuren 3a und 3b nochmals zu erkennen sind. An der Innensicke 2 befinden sich mehrere Ausprägungen 4, die, wie dies die Figur 2 zeigt, in entsprechende Ausnehmungen 5 einer Halteklammer 6 eines nicht näher dargestellten Haltefußes eines Dachlastträgers passgenau eingefügt sind. An der Unterseite des Holms 1 befinden sich mehrere Schraubbolzen 10, die der Befestigung des Holmes 1 an einem Fahrzeugdach dienen. Dies wird zusammen mit den Figuren 4 und 5 noch einmal näher dargestellt werden.

Die Figur 2 zeigt einen Bereich aus der Dachreling im Detail. Man erkennt, dass die Innensicke 2 eine etwa horizontal verlaufende obere Wand 2a und eine schräg verlaufende untere Seitenwand 2b aufweist. Die Halteklammer 6 weist entsprechend geformte Nasen 7 auf, die sich einerseits an der unteren Seitenwand 2b abstützen und die obere Seitenwand 2a untergreifen.

Damit wird auf der unteren Seitenwand 2b die Dachlast abgestützt, während die obere Seitenwand 2a dazu dient, eine stoßartige Belastung des Dachlastträgers abzufangen, die versucht, diesen von der Dachreling zu reißen. Entsprechend geformte Wände befinden sich auch in der Außensicke 3 auf der Außenseite des Holmes 1, die allerdings nicht so stark ausgeprägt sind wie die der Innensicke 2, was deutlich in den Figuren 3a und 3b zu erkennen ist.

In der Innensicke 2 befinden sich paarweise Ausprägungen 4. Diese können einen Sockel mit einer horizontal verlaufenden oberen Abschlusswand 8 bilden, wie dies die Figur 2 zeigt bzw. in der Querschnittsdarstellung der Figur 3a dargestellt ist. Sie können aber auch die gesamte Sicke überspannen, so dass sich der Querschnitt der Figur 3b ergibt. Das heißt eine zur Fahrzeugmitte gerichtete Sockelwand 9 deckt die Sicke 2 tangential ab.

An der Unterseite des Holmes 1 befinden sich mehrere Schraubbolzen 10, die durch entsprechend geformte Öffnungen 17 im Boden einer Dachrinne 18 hindurch geführt sind und von unten mittels einer Mutter 19 in der Dachrinne 18 befestigt sind.

Die Schraubbolzen 10 befinden sich jeweils in einem brückenartig ausgeformten Bereich des Bodens 11 des Holmes 1. Eine Brücke 12 wird von zwei Pfeilern 13a, 13b seitlich jeweils eines Schraubbolzens 10 gebildet. Die Unterseiten der Brückenpfeiler 13a, 13b stützen sich am Boden 11 der Dachrinne ab. Der Schraubbolzen 10 ist im Brückenbogen 14 befestigt. Dazu ist dort zunächst eine Nietmutter 15 befestigt, in die der Schraubbolzen 10 eingeschraubt ist.

Die brückenartige Ausgestaltung sorgt für eine gewisse Vorspannung auf die Befestigung, so dass auch bei einer Wechselbelastung des Dachlastträgers sich die Mutter 19 nicht lösen kann.

In Figur 5 ist die Befestigung nochmals verdeutlicht. Im Boden 11 des Holmes 1 ist die schon erwähnte Nietmutter 15 befestigt, wobei je ein Kragen 16a, 16b der Nietmutter 15 den Boden des Holmes 1 von oben und unten einfasst. In die Nietmutter 15 ist der Schraubbolzen 10 eingeschraubt und durch eine Öffnung 17 im Boden einer Dachrinne 18 hindurchgeführt und von unten, wie schon erwähnt, von einer Mutter 19 gehalten. Zwischen der Mutter 19 und der Unterseite der Dachrinne 18 befindet sich eine konisch geformte Unterlegscheibe 20, mit der ein Winkelausgleich möglich ist. Um zu verhindern, dass Feuchtigkeit durch die Öffnung 17 in eine Dachstrebe gelangt, ist noch ein elastischer Dichtring 21 vorgesehen.

Wie man aus der Figur 1 entnehmen kann, ragen die die Stützfüße bildenden Ausprägungen im Boden des Holmes 1 nur wenig über diesen nach unten hinaus, so dass der Holm 1 wie in Figur 5 gezeigt über seine gesamte Länge in die Dachrinne 18 eintaucht, wenn die Stützfüße am Boden der die Höhe der Stützfüße überragenden Dachrinne 18 befestigt sind. Dabei ergeben sich zu beiden Seiten der Dachreling 1 noch Spalte 22. Diese sind aber aus der Entfernung für das Auge nicht wahrnehmbar, so dass die Dachreling als integraler Bestandteil des Daches erscheint. Diese Spalte 22 können noch durch Kunststoffleisten 23 abgedeckt werden. In der montierten Situation befinden sich die beiden Sicken 2, 3 oberhalb der Dachhaut, so dass sie von der Halteklammer 6 des Dachgepäckträgers erreicht werden.

Mit der im Folgenden beschriebenen Ausführung lässt sich die Verbindung zwischen der Halteklammer 6 und der Dachreling noch weiter verbessern.

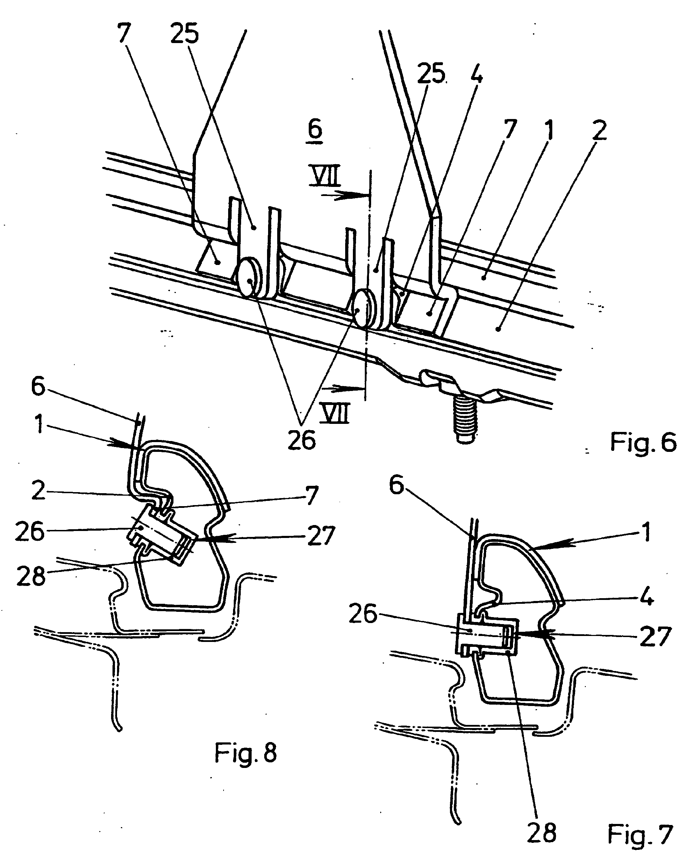

Fig. 6 entspricht der Ausführung nach Fig. 2; allerdings weist die Halteklammer 6 zwei nach unten abstehende Laschen 25 auf, an deren Enden nach innen gerichtete Haltebolzen 26 befestigt sind. Diese ragen, was die Querschnittsdarstellung der Fig. 7. zeigt, in einen Schacht 27 ein, der von einer Nietmutter 28 an der Ausprägung 4 gebildet ist. Da der Haltebolzen weitgehend passgenau in den Schacht 27 eingeführt ist, ist diese Verbindung auch bei ruckartigen Belastungen nicht zu lösen.

Fig. 8 verdeutlicht, dass der Schacht 27 mit der Nietmutter 28 nicht unbedingt im Bereich der Ausprägung 4 ausgebildet sein muss, sondern auch in der Sicke 2 selbst, der Haltebolzen 26 ist dementsprechend an den Nasen 7 der Halteklammer 6 befestigt. Da die Nietmutter schräg nach unten zeigt, lässt sich bei dieser Ausführung die Montage relativ leicht durchführen.

Mit der beschriebenen Dachreling ergibt sich somit ein Bauteil, das sich ästhetisch mit dem Dach des Fahrzeuges verbindet, was mit nur einem geringen zusätzlichen Luftwiderstand verbunden ist. Außerdem ist es möglich, einen Dachlastträger in einfacher Weise mit der Dachreling zu verbinden. Die Herstellung mittels eines Innenhochdruckverfahrens erlaubt eine rationelle Fertigung.

### Bezugszeichenliste

- 1: Holm
- 2: Sicke
- 3: Sicke
- 4: Ausprägung
- 5: Ausnehmung

- 6: Halteklammer
- 7: Nasen
- 8: Abschlusswand
- 9: Sockelwand
- 10: Schraubbolzen

- 11: Boden
- 12: Brücke
- 13a, b: Brückenpfeiler
- 14: Brückenbogen
- 15: Nietmutter

- 16a, b: Kragen
- 17: Öffnung
- 18: Dachrinne
- 19: Mutter
- 20: Unterlegscheibe

- 21: Dichtring
- 22: Spalt
- 23: Kunststoffleiste
- 25: Laschen

- 26: Haltebolzen
- 27: Schacht
- 28: Nietmutter

## Patentansprüche

1. Dachreling für ein Fahrzeug aufweisend einen länglichen, hohl ausgeführten Holm (1), der mit mindestens zwei Stützfüßen auf dem Dach des Fahrzeuges befestigbar ist, wobei in den Seitenwänden des Holmes (1) Einprägungen zur Aufnahme von Halteklammern (6) eines an der Dachreling zu befestigenden Querträgers vorgesehen sind, **dadurch gekennzeichnet, dass** die Stützfüße einteilig mit dem Holm (1) ausgeführt sind und als Ausprägungen des Holmbodens realisiert sind, und dass die Stützfüße jeweils eine Brücke (12), bestehend aus Brückenpfeilern und einem Brückenbogen bilden, wobei Brückenpfeiler (13a, 13b) am Fahrzeugdach abgestützt sind und der Brückenbogen (14) unter Spannung am Fahrzeugdach befestigt ist.

2. Dachreling nach Anspruch 1, **dadurch gekennzeichnet, dass** es sich bei den Einprägungen um sich in Längsrichtung des Holmes (1) erstreckende Sicken(2, 3) handelt.

3. Dachreling nach Anspruch 1 oder 2, **dadurch gekennzeichnet, dass** zumindest in den Einprägungen einer Holmseite Vorsprünge in Form von Ausprägungen (4) vorhanden sind, die mit entsprechenden Ausnehmungen (5) an den Halteklammern (6) korrespondieren, um so deren Verschiebung entlang des Holmes (1) zu verhindern.

4. Dachreling nach einem der vorhergehenden Ansprüche, **dadurch gekennzeichnet, dass** die Halteklammer (6) und der Holm (1) über in etwa horizontal verlaufende Haltebolzen (26) miteinander verbunden sind.

5. Dachreling nach Anspruch 4, **dadurch gekennzeichnet, dass** der Haltebolzen (26) an der Halteklammer (6) befestigt ist und in einen entsprechend geformten Schacht (27) im Holm (1) eingeführt ist.

6. Dachreling nach Anspruch 4, **dadurch gekennzeichnet, dass** der Schacht (27) sich in der Ausprägung (4) befindet.

7. Dachreling nach Anspruch 4, **dadurch gekennzeichnet, dass** der Schacht (27) sich in der Sicke (2) befindet.

8. Dachreling nach einem der vorhergehenden Ansprüche, **dadurch gekennzeichnet, dass** der Holm (1) seine Form durch ein Innenhochdruckverfahren erhalten hat.

9. Dachreling nach Anspruch 1, **dadurch gekennzeichnet dass** im Brückenbogen (14) Nietmuttern (15) angebracht sind, in die jeweils ein Schraubbolzen (10) einschraubbar ist, um die Dachreling am Fahrzeugdach zu verschrauben.

10. Dachreling nach Anspruch 1, **dadurch gekennzeichnet, dass** im Brückenbogen (14) ein mit einem Gewinde versehener schweissbolzen vorgesehen ist.

11. Dachreling nach Anspruch 9 oder 10, **dadurch gekennzeichnet, dass** ein elastischer Dichtring (21) auf dem Schraubbolzen (10) vorhanden ist.

12. Fahrzeugdach mit zwei Dachrinnen in der Dachhaut, an deren Böden jeweils eine Dachreling nach einem der vorhergehenden Ansprüche an mindestens zwei voneinander beabstandeten Stellen befestigt ist, wozu die Stützfüße des Holmes (1) dort in die Dachrinne (18) eintauchen, **dadurch gekennzeichnet, dass** der Holmboden in den Abschnitten zwischen den Stützfüßen ebenfalls in die Dachrinne (18) eintaucht, wobei die Einprägung sich oberhalb der Dachhaut befindet und dass dazu die Ausprägungen im Holmboden nur wenig gegenüber diesen hervorstehen.

## Claims

1. Roof rail for a vehicle, comprising an elongated, hollow strut (1) which can be fastened to the roof of the vehicle by way of at least two support feet, wherein impressions are provided in the side walls of the strut (1) to hold retaining clamps (6) of a transverse bar which is to be fastened to the roof rail, **characterised in that** the support feet are integral with the strut (1) and in the form of raised portions of the strut bottom, and that the support feet in each case form a bridge (12) consisting of bridge piers and a bridge arch, wherein bridge piers (13a, 13b) are supported on the vehicle roof and the bridge arch (14) is fastened under stress to the vehicle roof.

2. Roof rail according to Claim 1, **characterised in that** the impressions are beads (2, 3) extending in the longitudinal direction of the strut (1).

3. Roof rail according to Claim 1 or 2, **characterised in that** projections in the form of raised portions (4) are provided at least in the impressions of one strut side, which raised portions correspond with corresponding recesses (5) on the retaining clamps (6) in order thus to prevent the displacement thereof along the strut (1).

4. Roof rail according to any one of the preceding Claims, **characterised in that** the retaining clamp (6) and the strut (1) are connected together by means of retaining bolts (26) extending approximately horizontally.

5. Roof rail according to Claim 4, **characterised in that** the retaining bolt (26) is fastened to the retaining clamp (6) and introduced into a correspondingly shaped socket (27) in the strut (1).

6. Roof rail according to Claim 4, **characterised in that** the socket (27) is located in the raised portion (4).

7. Roof rail according to Claim 4, **characterised in that** the socket (27) is located in the bead (2).

8. Roof rail according to any one of the preceding Claims, **characterised in that** the strut (1) has been shaped by a hydroforming process.

9. Roof rail according to Claim 1, **characterised in that** rivet nuts (15) are fixed in the bridge arch (14), into which nuts a respective screw bolt (10) can be screwed in order to screw the roof rail to the vehicle roof.

10. Roof rail according to Claim 1, **characterised in that** a welded bolt provided with a thread is provided in the bridge arch (14).

11. Roof rail according to Claim 9 or 10, **characterised in that** a resilient sealing ring (21) is provided on the screw bolt (10).

12. Vehicle roof with two gutters in the roof panel, to the bottoms of which a roof rail according to any one of the preceding Claims is in each case fastened at least at two spaced points, for which purpose the support feet of the strut (1) enter the gutter (18) here, **characterised in that** the strut bottom in the portions between the support feet also enters the gutter (18), wherein the impression is located above the roof panel, and that, in addition, the raised portions in the strut bottom only protrude slightly with respect to the latter.

## Revendications

1. Rail de toit pour un véhicule présentant un longeron (1) allongé, creux, qui est fixé par au moins deux pieds-supports sur le toit du véhicule, des défonces étant prévues dans les parois latérales du longeron (1) pour accueillir des étriers de retenue (6) d'une barre transversale qui se fixe sur le rail de toit, **caractérisé en ce que**, les pieds-supports sont formés d'une seule pièce avec le longeron (1) et réalisés sous la forme de parties estampées dans le fond du longeron, et que chaque pied-support forme un pont (12), constitué de piliers de pont et d'une arche de pont, des piliers de pont (13a, 13b) s'appuyant au toit du véhicule et l'arche du pont (14) étant fixée sous contrainte au toit du véhicule.

2. Rail de toit selon la revendication 1, **caractérisé en ce que**, les défonces (2,3) sont des moulures s'étendant dans le sens de la longueur du longeron (1).

3. Rail de toit selon la revendication 1 ou 2, **caractérisé en ce que**, des défonces en forme de parties estampées (4) sont aménagées au moins dans les défonces d'une paroi du longeron, qui correspondent à des creux appropriés (5) sur les étriers de retenue (6), pour éviter le glissement de ces derniers le long du longeron (1).

4. Rail de toit selon l'une des revendications précédentes, **caractérisé en ce que**, les étriers de retenue (6) et le longeron (1) sont assemblés par des boulons de retenue (26) s'étendant sensiblement horizontalement.

5. Rail de toit selon la revendication 4, **caractérisé en ce que**, le boulon de retenue (26) est fixé à l'étrier de retenue (6) et est introduit dans une cavité (27) de forme appropriée du longeron (1).

6. Rail de toit selon la revendication 4, **caractérisé en ce que**, la cavité (27) est aménagée dans la partie estampée (4).

7. Rail de toit selon la revendication 4, **caractérisé en ce que**, la cavité (27) est aménagée dans la moulure (2).

8. Rail de toit selon l'une des revendications précédentes, **caractérisé en ce que**, la forme du longeron (1) est obtenue au moyen d'un procédé de haute pression interne.

9. Rail de toit selon la revendication 1, **caractérisé en ce que**, des écrous à river (15) sont installés dans l'arche de pont (14), dans chacun d'eux un boulon fileté (10) est vissé, pour visser le rail de toit sur le toit du véhicule.

10. Rail de toit selon la revendication 1, **caractérisé en ce que**, un goujon à souder muni d'un filetage est prévu dans l'arche de pont (14).

11. Rail de toit selon la revendication 9 ou 10, **caractérisé en ce que**, une bague d'étanchéité élastique (21) est aménagée sur le boulon fileté (10).

12. Toit de véhicule avec deux gouttières dans le revêtement du toit, sur les fonds de chacune desquelles est fixé un rail de toit selon l'une des revendications précédentes à au moins deux endroits espacés l'un de l'autre, où les pieds d'appui du longeron (1) s'enfoncent dans la gouttière (18), **caractérisé en ce que**, le fond du longeron s'enfonce dans les parties entre les pieds d'appui et aussi dans la gouttière (18), la défonce est aménagée au dessus du revêtement du toit et par conséquent les parties estampées dans le fond du longeron ne dépassent que légèrement de ce dernier.
